**Europäisches Patentamt**

**European Patent Office**

**Office européen des brevets**

(19)

(11) Veröffentlichungsnummer: **0 494 859 B1**

(12)
# EUROPÄISCHE PATENTSCHRIFT

(45) Veröffentlichungstag der Patentschrift: **27.04.94**

(51) Int. Cl.5: **B60R 21/32**

(21) Anmeldenummer: **90903761.6**

(22) Anmeldetag: **23.02.90**

(86) Internationale Anmeldenummer:
**PCT/DE90/00125**

(87) Internationale Veröffentlichungsnummer:
**WO 91/05680 (02.05.91 91/10)**

(54) **SCHALTUNGSANORDNUNG ZUM AUSLÖSEN EINES INSASSEN-SCHUTZSYSTEMS EINES FAHRZEUGES.**

(30) Priorität: **10.10.89 DE 3933829**

(43) Veröffentlichungstag der Anmeldung:
**22.07.92 Patentblatt 92/30**

(45) Bekanntmachung des Hinweises auf die
Patenterteilung:
**27.04.94 Patentblatt 94/17**

(84) Benannte Vertragsstaaten:
**DE FR GB**

(56) Entgegenhaltungen:
**EP-A- 339 967**          **EP-A- 0 027 747**
**EP-A- 0 284 728**       **DE-A- 2 309 111**
**DE-A- 3 116 867**       **US-A- 4 835 513**

(73) Patentinhaber: **SIEMENS AKTIENGESELL-
SCHAFT
Wittelsbacherplatz 2
D-80333 München(DE)**

(72) Erfinder: **SWART, Marten
Albrecht-Altdorfer-Ring 70
D-8407 Obertraubling(DE)**
Erfinder: **EIGLER, Jürgen
Am Judenfeld 16
D-8400 Regensburg(DE)**
Erfinder: **VOGT, Richard
Dahlienweg 4
D-8411 Sinzing(DE)**

## Beschreibung

Die Erfindung betrifft eine Weiterbildung einer speziellen Schaltungsanordnung, die im Oberbegriff des Patentanspruches 1 definiert und für sich durch DE-A-2309111, Figur 3 vorbekannt ist. Bei diesem Stande der Technik ist eine Parallelschaltung von zwei Stromzweigen mit je einem eigenen Auslöser und eigenem Kondensator sowie eigenem individuellen Auslöseschalter vorgesehen, sowie ein zu den Auslösern in Reihe liegender gemeinsamer Auslöseschalter, wobei, gesehen von einer die Stromzweige speisenden Spannungsquelle, der Kondensator während seiner Aufladung jeweils parallel zum zugeordneten Auslöser liegt. Die Kondensatoren erzeugen bei einem Unfall kräftige Stromstöße durch die zugeordneten Auslöser. Die Auslöser liegen vor dem Unfall auf floatenden Potentialen, also nicht auf definierten Dauerbetriebsspannungen. Über sporadische oder laufende Überprüfungen der Funktionstüchtigkeit der wichtigsten Teile der Schaltungsanordnung, z.B. ihrer Kondensatoren, ist nichts angegeben.

Bei der erfindungsgemäßen Schaltungsanordnung liegen die Kondensatoren während ihrer Aufladung nicht parallel sondern in Serie zu den zugeordneten Auslösern. Außerdem liegen bei der Erfindung nicht nur die Kondensatoren, sondern auch die Auslöser auf definierbaren Dauerbetriebsspannungen, wobei zumindest im Prinzip auch schon die Beträge dieser Dauerbetriebsspannungen vor dem Unfall eine gewisse Aussage über die Funktionstüchtigkeit auch der Zündpille zulassen, weil ungewöhnliche Dauerbetriebsspannungen auf Störungen hinweisen.

Auch bei der in der EP-A1-0 284 728 beschriebenen Schaltungsanordnung sind mehrere Auslöseschalter vorgesehen, nämlich sowohl in Reihe zur Parallelschaltung als auch jeweils ein zusätzlicher eigener Auslöseschaler in jedem Stromzweig in Serie zum Kondensator. Diese Kondensatoren lassen bei einem Unfall in betreffenden Stromzweig den Fluß des Stromstoßes nur so lange zu, bis dieser Kondensator durch diesen Stromfluß aufgeladen ist. Diese Kondensatoren dienen aber nicht zur Speicherung der zum Auslösen benötigten Energien, sondern ausdrücklich nur dazu, eine vollständige Entladung eines dort zentral angebrachten zusätzlichen Zündkondensators schon während der Zündung einer ersten der Zündpillen zu vermeiden, damit die Zündung auch der übrigen Zündpillen sichergestellt ist. Aus der Figur des erwähnten Standes der Technik geht überdies hervor, daß die betreffenden Kondensatoren während der Fahrt, vor dem Unfall, an keine Spannungsquelle angeschlossen sind, also nicht auf eine zuverlässig definierbare Dauerbetriebs-spannung aufgeladen sind. Überdies weisen die betreffenden Kondensatoren der Stromzweige jeweils nur rund 20 % der Kapazität des dort zentral angebrachten Zündkondensators auf. Es ist bei der bekannten Schaltungsanordnung also wirklich der zentral angebrachte Zündkondensator, welcher alleine die für die Auslösung der Auslöser nötige Energie vor dem Unfall speichert. Die bei der bekannten Schaltungsanordnung angebrachten Kondensatoren speichern also keine ausreichende Energie vor dem Unfall, um den in ihrem Stromzweig liegenden Auslöser bei einem Unfall auslösen zu können.

Die Aufgabe,
- trotz eines möglichst einfachen konstruktiven Aufbaus eine extreme Zuverlässigkeit der Schaltungsanordnung zu erreichen, wobei diese Zuverlässigkeit der Schaltungsanordnung beliebig oft vor dem Unfall leicht überprüfbar sein soll,
- nämlich trotz des geringen Schaltungsaufwandes
  ° nicht nur die Kondensatoren mit so niedrigen Strömen aufladen zu können, daß die Gefahr einer unbeabsichtigten Fehlauslösung der Auslöser durch zu hohe Ströme im Auslöser vermieden ist,
  ° sondern vor allem auch während der Fahrt vor dem Unfall ohne viel Aufwand eine leichte, zuverlässige, automatische und routinemäßige Überprüfung von besonders sicherheitsrelevanten Bestandteilen der Schaltungsanordnung zu gestatten, - wozu diese Bestandteile nicht nur auf gut definierbaren, leicht meßbaren Dauerbetriebsspannungen liegen, sondern bei Bedarf auch über Meßpunkte besonderen Prüfspannungen bzw. Meßströmen ausgesetzt werden können, um gegebenenfalls rechtzeitig vor einem Unfall feststellen zu können, ob und wo in der Schaltungsanordnung eine Ursache für einen fehlerhaft nicht auslösenden Auslöser, also z.B. für eine fehlerhaft nicht auslösende Zündpille, liegt,
  ° sowie später, sobald wirklich ein Unfall eintritt, eine sichere Auslösung aller Auslöser bzw. aller Zündpillen zu gewährleisten, indem bei einem Unfall eine gute Entkopplung der Stromzweige erreichbar ist sowie indem bei dem Unfall die in den Kondensatoren gespeicherten Energien besonders gut zur Erzeugung kräftiger kurzer Stromstöße ausnutzbar sind,
  ° und zusätzlich - den zentralen Zündkondensator zu vermeiden, der nämlich bei einem Unfall eine besondere Sorgfalt für die Verteilung seiner Energie an die verschiedenen Auslöser der verschiedenen Stromzweige erfordern würde,

wird erfindungsgemäß durch die im Patentanspruch 1 genannten Maßnahmen gelöst.

Der Stromstoß wird bei der Erfindung - wie bei der DE-A-2309111, Figur 3 - nur dann ausgelößt, wenn mindestens zwei Auslöseschalter gleichzeitig leitend sind, nämlich der individuelle Auslöseschalter in einem der Stromzweige sowie der während des Stromstoßes dazu in Reihe liegende gemeinsame Auslöseschalter.

Die Erfindung gestattet aber, nicht nur die Dauerbetriebsspannungen zur Aussagen über die Funktiontüchtigkeit zu benutzen. Die Erfindung gestattet darüber hinaus, vor dem Unfall durch Schließen von jeweils nur einem dieser beiden Auslöseschalter einen Meßstrom nur über ausgewählte Bestandteile der Schaltungsanordnung, wobei die Wirkungen des Meßstromes an entsprechenden, dazu bei der Erfindung angebrachten Meßpunkten meßbar ist - meßbar z.B. als dadurch erzeugte Differenzspannung über dem ausgewählten Bestandteil, z.B. über der so ausgewählten Zündpille, wobei diese Differenzspannung dann ein Maß ist für den (momentanen) Widerstand, also z.B. Zündpillenwiderstand. Soweit nämlich hierbei diese Meßströme direkt über die Auslöser fließen, sind sie zu schwach, um diese Auslösers auszulösen, weil diese Auslöser erst durch die kräftigen Stromstöße ausgelöst werden. Auch der zeitliche Verlauf der dann an Widerständen bzw. Meßpunkten meßbaren Spannung kann auch als Maß für die (momentanen) Kapazität eines betreffenden Kondensators des betreffenden Stromzweiges dienen.

Die Erfindung gestattet also eine zumindest von Zeit zu Zeit durchgeführte und damit besonders genaue rechtzeitige Prüfung der Funktionstüchtigkeit der wichtigsten Bestandteile der Schaltungsanordnung, indem die Funktiontüchtigkeit der besonders zuverlässigkeitsrelevanten Bestandteile vor dem Unfall automatisch und routinemäßig oft wiederholbar über Meßpunkte überprüft werden können, indem in jedem Stromzweig zumindest die durch die Spannungsquelle erzeugten Dauerbetriebsspannungen an der Serienschaltungen geprüft werden können.

Die Erfindung kommt außerdem ohne einen zentral angeordneten Zündkondensator hoher Kapazität aus. Die Erfindung weist statt dessen je Stromzweig mindestens einen dort angebrachten, dann eine entsprechend geringere Kapazität aufweisenden (Zünd)Kondensator auf. Statt nämlich die Zündenergie in dem einzigen zentralen Kondensator zu speichern und bei einem Unfall die Entkopplung der Auslöser untereinander umständlich entweder über mechanische Schalter oder über Zündstrombegrenzungen zu erreichen, wird / werden bei der Erfindung der / die Auslöser jedes Stromzweiges durch diesen Stromzweigen individuell zugeordnete, erfindungsgemäß in spezieller Weise geschaltete (Zünd-)Kondensatoren und durch ihre in spezieller Weise geschalteten individuellen Auslöseschalter ausgelöst. Soweit bei der Erfindung zusätzlich eine Entkoppelung der Stromzweige während der Auslösung ratsam oder nötig ist, kann sie, wie anhand eines Beispiels später gezeigt wird, in sehr einfacher Weise z.B. auch über Widerstände und / oder Gleichrichter erfolgen.

Wie das unten detaillierter erläuterte erfindungsgemäße Beispiel zeigt, braucht überdies überraschenderweise die Kapazität der (Zünd-)Kondensatoren der Erfindung nicht größer als die Kapazität der in den bekannten Stromzweigen angebrachten Kondensatoren zu sein - bei der Erfindung kann deren Kapazität sogar kleiner als die der bekannten sein, obwohl der zentrale Zündkondensator bei der Erfindung nicht benötigt wird !

Die Auslöser, also z.B. die Zündpillen, der Stromzweige müssen bei der Erfindung nicht unbedingt nur ein und denselben Typ von Schutzsystem auslösen. Bei der erfindungsgemäßen Schaltungsanordnung können ein Teil der Auslöser z.B. einen oder mehrere Airbags auslösen, sowie ein anderer Teil der Auslöser hingegen Gurtstrammer und / oder einen oder mehrere Überrollbügel auslösen.

Die verschiedenen individuellen Auslöseschalter können übrigens, wie schon beim erwähnten Stande der Technik angegeben, die betreffenden Auslöser simultan oder auch zeitlich hintereinander gestaffelt auslösen.

Die in den Unteransprüchen genannten zusätzlichen Maßnahmen gestatten, zusätzliche Vorteile zu erreichen. u.a. gestatten nämlichen die Maßnahmen gemäß Patentanspruch

2, während des Betriebes auch die Funktionstüchtigkeit der einzelnen Bestandteile der dadurch gebildeten Meßstrekken, also die Auslöseschalter und sonstige damit verbundenen Bestandteile, zu überprüfen, ohne daß die Gefahr besteht, dadurch die Auslöser ungewollt auszulösen,

3, 4 und 5, eine besonders genaue zumindest von Zeit zu Zeit durchgeführte Prüfung der Funktionstüchtigkeit der wichtigsten Teile der Schaltungsanordnung zu ermöglichen,

6, nachträglich eine zuverlässige Aussage über richtiges und falsches Verhalten der Schaltungsanordnung - evtl. auch des Fahrers - auch noch lange nach dem Unfall zu ermöglichen,

7, in eleganter Weise einen besonders einfachen aufwandsarmen Hardware-Aufbau der Schaltungsanordnung zu ermöglichen,

8, mit wenig Hardware-Aufwand zusätzlich eine rechtzeitige Warnung der Insassen vor Defekten des Insassen-Schutzsystems zu ermöglichen, sowie

9, eine Optimierung der Zeitpunkte, zu welchen individuell den verschiedenen Insassen zugeordnete Schutzsysteme auslösen sollen, zu erreichen.

Ein bevorzugtes Beispiel der Erfindung und von deren Weiterbildungen wird in den Figuren gezeigt:

Figur 1      zeigt eine Anwendung der Erfindung zur Auslösung von drei Airbags mittels dreier Auslösekreise.

Figur 2      zeigt die Schaltung von Figur 1 noch detaillierter bez. jener Schaltungsteile, die rechts von "Ansteuerschaltungen der Transistoren" ANST (Figur 1) sind.

Figur 3      zeigt Details der Aufladung des Zündkondensators eines der drei Auslösekreise. Figur 4 zeigt Details beim Entladen des in Figur 1 gezeigten Zündkondensators.

Figur 5 und 6      zeigen die in Figur 1 als Block gezeigten Ansteuerschaltungen ANST der Transistoren, vgl. auch die dazu korrelierenden Hinweise auf Ansteuerungen ANST in Figur 2.

Die Figuren zeigen also beispielhaft eine bevorzugte Schaltungsanordnung zum Auslösen eines Insassen-Schutzsystems, z.B. eines Airbagund/oder Gurtstrammersystems, eines Fahrzeuges.

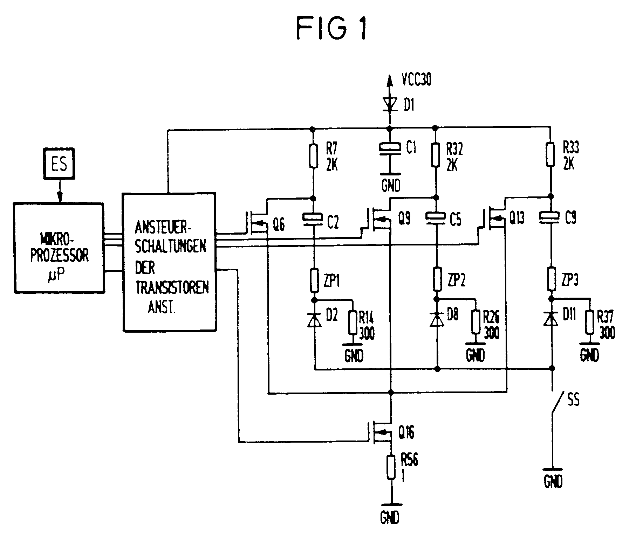

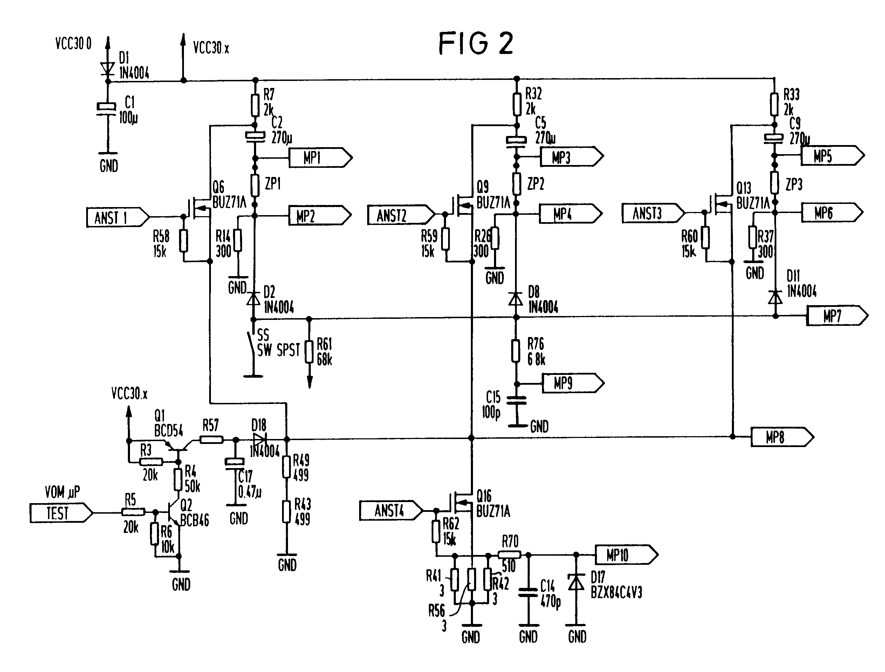

Es enthält die in den Figuren 1 und 2 gezeigten drei Auslöser/Zündpillen ZP1, ZP2, ZP3, durch welche bei einem Unfall genügender Schwere jeweils ein Stromstoß geleitet wird, der seinerseits den Schutz, also z.B. das Aufblasen von Airbags, auslöst.

Die Figuren 1 und 2 zeigen ferner drei Stromzweige ZP1/C2, ZP2/C5, ZP3/C9, die hier jeweils eine Zündpille ZP1, ZP2, ZP3, sowie den Kondensator C2, C5, C9 als Serienschaltung enthalten. Die drei Stromzweige bilden eine Parallelschaltung, die zwischen den Klemmen VCC30 und GND einer Stromversorgungsquelle liegt.

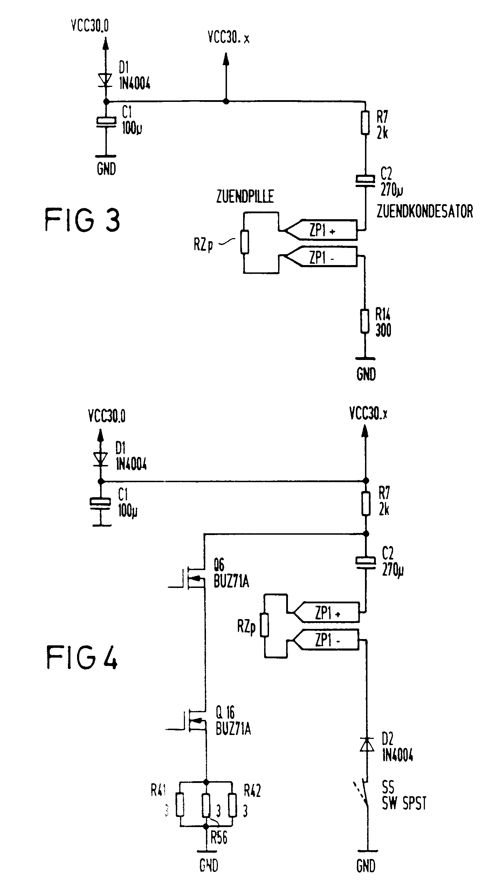

Die Figuren 1 und 2 zeigen ferner einen Auslöseschalter SS, dessen Schaltstrecke jeweils vor dem Unfall nichtleitend ist und bei einem Unfall genügender Schwere in seinen leitenden Zustand übergeht und damit den Stromstoß durch die Zündpillen ZP1, ZP2, ZP3 teils unmittelbar - vgl. z.B.den Ausschnitt von Figur 2 in Figur 4 - z.B. über SS - GND - R41/R56/R42 - Q16 - Q6 - C2 - ZP1 - D2 veranlaßt, teils mittels des Mikroprozessors μP mittelbar veranlaßt; der Mikroprozessor erkennt nämlich, z.B. besonders über die vom Mikroprozessor μP abgetasteten Meßpunkte MP7,

MP9, das Leitendwerden des Auslöseschalters SS des Crashsensors, woraufhin der Mikroprozessor μP beim Unfall sofort (entweder simultan oder zeitlich gestaffelt knapp hintereinander) die Schaltstrecken der Schalter Q16, Q6, Q9 und Q13 in deren leitenden Zustand steuert.

Beim gezeigten Beispiel ist also während der Fahrt, vor dem Unfall, der Kondensator C2, C5, C9 eines jeden der Stromzweige ZP1/C2, ZP2/C5, ZP3/C9 über einen oder mehrere hochohmige Widerstände, hier R7/R14, R32/R26, R33/R37, an die Spannungsquelle VCC30, GND - vgl. auch diese in Figur 3 skizzierte Betriebsphase - so angeschlossen, daß damit vor dem Unfall diese Kondensatoren C2, C5 und C9 auf ihre Zündspannung, hier ca. 30 V, aufgeladen sind. Die Aufladung erfolgt über so hochohmige Widerstände, damit die dann (im gezeigten Beispiel) im Aufladestromkreis seriell eingefügten Auslöser ZP1, ZP2, ZP3 noch nicht auslösen können. Dabei weist jeder Kondensator C2, C5, C9 von jedem Stromzweig ZP1/C2, ZP2/C5, ZP3/C9 sowohl eine so hohe Eigenkapazität, hier 270 μF, als auch vor dem Unfall eine so hohe Zündspannung, hier jene ca. 30 V, auf, daß jeder Kondensator C2, C5, C9 bei dem Unfall den Stromstoß mit zuverlässig ausreichender Energie an die ihm jeweils zugeordnete Zündpille ZP1, ZP2, ZP3 liefert. Die Kapazitäten und die Zündspannung, und damit die vor dem Unfall in diesen Kondensatoren C2, C5, C9 gespeicherten Energien reichen sogar aus, um - trotz evtl. spürbarer zusätzlicher Energieverluste in D2, D8, D11, Q6, Q9, Q13, Q16, R41, R42, R56 - jeweils die zugeordneten Zündpillen ZP1, ZP2, ZP3 des betreffenden Stromzweiges (ZP1/C2, ZP2/C5, ZP3/C9 zuverlässig auszulösen.

Die zum Zünden der drei Zündpillen ZP1, ZP2, ZP3 erforderliche Energie wird also in den eigenen Kondensatoren C2, C5, C9 dieser Stromzweige gespeichert. Die Kapazitäten dieser drei Kondensatoren sind so gewählt, daß deren gespeicherte Energie selbst im worst-case-Fall für eine sichere Zündung ausreicht.

Für die nachfolgenden Betrachtungen werden die in den Figuren 3 und 4 gezeigten Ausschnitte aus den Figuren 1 und 2, also die Bauteile-Hinweiszeichen des ersten Stromzweiges ZP1/C2 verwendet. Für die anderen Stromzweige wären die entsprechenden anderen Hinweiszeichen einzusetzen.

Die Aufladung des Kondensators C2 erfolgt gemäß Figur 3 also hochohmig über die Widerstände R7, R14 und die Zündpille, weil dann die Schaltstrecke des Schalters Q6 nichtleitend ist. Der Spannungsendwert der Aufladung, also die Zündspannung, beträgt bei einer Betriebsspannung von 30 V ca. 29,4 V wegen des Spannungsabfalls an der Diode D1.

Die Ladezeitkonstante $t_0$ ergibt sich somit aus der Formel :

$$t_0 = (R7 + R14 + RZp).C2 = 620 \text{ ms.}$$

Bis sich der Kondensator C2 voll aufgeladen hat, vergehen also ca. $5t_0 = 3{,}1$ s.

Geht man entsprechend den gemachten Erfahrungen davon aus, daß eine Zündung schon bei einer Kondensatorspannung von 20 V sichergestellt ist, vergeht bei der in Figur 3 gezeigten Dimensionierung aller Bauteile nach dem Einschalten der Schaltungsanordnung eine Zeit von nur ca. 700 ms, bis das Gerät einsatzbereit ist.

Bei der Entladung des Kondensators C2, also beim Unfall, ist aber die Schaltstrecke der Schalter Q6, Q16 und SS leitend. Dann wird GND-Potential an die positiv aufgeladene Seite des Kondensators gelegt, wodurch nun in einem dann niederohmigen Auslösestromkreis ein erheblicher Teil der Zündspannung dieses Kondensators C2 über der Zündpille liegt; vgl. damit nun den in Figur 4 gezeigten Ausschnitt von den Figuren 1 und 2. Die Entladung des Kondensators C2 bei der Zündung der Zündpille ZP1 erfolgt also über den niederohmigen Strompfad vom Pluspol zum Minuspol des Kondensators C2 wie folgt : durchgeschalteter MOSFET Q6 - durchgeschalteter MOSFET Q16 - Stromstoß-Erkennungswiderstände R41/R42/R56 - geschlossener Safing-Sensor/Crashsensor SS -Diode D2 - Zündpille ZP1.

Der durch die Zündpille fließende Stromstoß wird also im Zündfall im wesentlichen nur begrenzt durch die Stromstoß-Erkennungswiderstände, die Kanalwiderstände der MOSFETs und den Zündpillenwiderstand selbst.

In diesem Stromkreis sind (auch in den beiden anderen Stromzweigen ZP2/C5, ZP3/C9) übrigens vorteilhafterweise immer zwei Transistoren/MOSFETs in Reihe, so daß vor dem Unfall, z.B. beim Starten des Fahrzeuges, immer die Schaltstrecke des einen dieser beiden MOSFETs zu Testzwecken durchgeschaltet werden darf, während die Schaltstrecke des zweiten MOSFET nichtleitend bleibt und seinerseits die Zündung der Zündpille während dieses Testvorganges verhindert. Der Safingsensor/Crashsensor SS befindet sich während dieses Testvorganges zusätzlich im in Figur 4 gezeigten Strompfad und verhindert seinerseits, daß ein Defekt in der Elektronik, also z.B. das fehlerhafte Leiten der Schaltstrecke eines der beiden Schalter Q16, Q6, eine bei einem Test an sich nicht beabsichtigte Zündung auslöst. Das gilt auch für einen Test der beiden anderen Stromzweige des in den Figuren 1 und 2 gezeigten Beispiels.

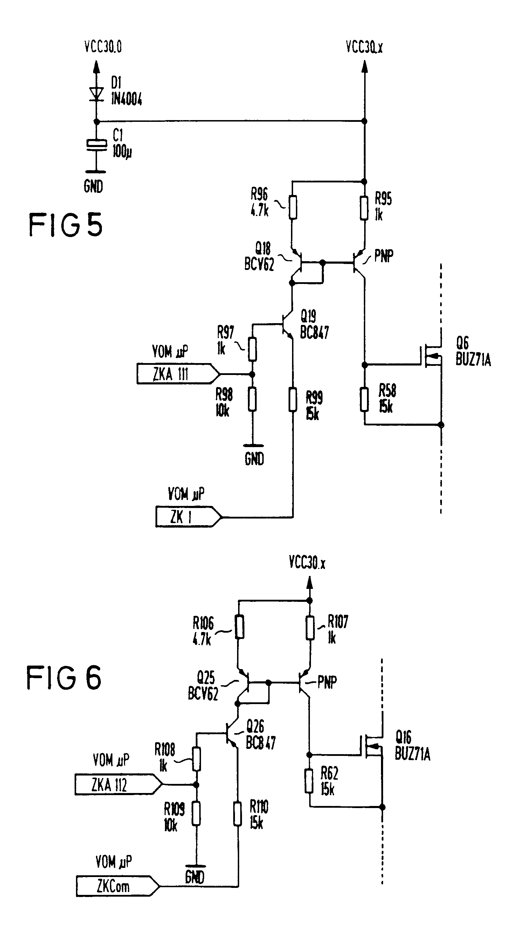

In der Figur 2 sind mehrere Meßpunkte MP1 bis MP10 gezeigt. Deren Potential kann zu Testzwecken während des Betriebes des Fahrzeuges, besonders bei dessen Start, vom Mikroprozessor $\mu$P überprüft werden. Um diese Überprüfung noch zuverlässiger zu machen, kann während der Überprüfung zusätzlich an mehrere definierte Schaltungspunkte Testsignale gelegt werden, vgl. z.B. die Potentialeingänge TEST, ANST1 bis ANST4, auch die in Figur 5 und 6 gezeigten Potentialeingänge ZK1, ZKA111, ZKA112, ZKCom; - zumindest ein Teil dieser Potentialeingänge kann übrigens auch in normalen Betriebszeiten, also vor dem Unfall oder beim Unfall, zusätzlich zur Steuerung der Schaltungsanordnung verwendet werden. Vor allem über den Potentialeingang TEST, vgl. Figur 2, kann vorübergehend mittels des Schalters Q1 eine Testspannung, hier die Hälfte von VCC30 also 15 V, an den Meßpunkt MP8 gelegt, damit der Beginn eines Unfalls simuliert und an den Stromstoß-Erkennungswiderständen R41/R42/R56 = hier 1 Ohm mittels des Meßpunktes MP10 beobachtet werden - was auch zuverlässig gestattet, den Schalter Q16 zu testen.

Die Figur 1, noch genauer die Figur 2, zeigt, daß der MOSFET Q16 und die oben schon erwähnten parallelgeschalteten Stromstoß-Erkennungswiderstände R41/R42/R56 für alle Stromzweige gemeinsam verwendet werden. Der Aufwand für diese Bauteile ist also gering.

Im gezeigten Beispiel werden beim Unfall die Schaltstrecken der beiden MOSFETs Q16 und Q6 im Strompfad durchgeschaltet, wie anhand von Figur 4 erläutert wurde. Jedem der hier insgesamt vier MOSFETs Q16, Q6, Q9, Q13 ist die in Figur 1 gezeigte Ansteuerschaltung ANST vorgeschaltet, vgl. in Figur 2 die entsprechenden Hinweise auf die Potentialeingänge ANST1 bis ANST4, welche Ausgänge der in Figur 1 gezeigten Ansteuerschaltungen ANST darstellen. Zum Durchschalten eines MOSFET werden hier z.B. zwei komplementäre Signale zum Prozessor benutzt; die Figuren 5 und 6 zeigen solche Beispiele für den Aufbau der betreffenden Ansteuerschaltungen ANST - in Figur 5 nur auszugsweise für den ersten Stromzweig mit dem MOSFET-Schalter Q6; in den beiden anderen Stromzweigen sind die Ansteuerschaltungen ANST gleichartig wie in Figur 5 aufgebaut und betrieben.

Der in Figur 5 gezeigte high-aktive Potentialeingang ZKA111 ist für die drei die Auslösung steuernden Schalter/Transistoren Q6, Q9, Q13 gemeinsam vorgesehen. Der in Figur 5 gezeigte Potentialeingang ZK1 sowie die entsprechenden, den beiden anderen Schaltern Q9, Q13 zugeordneten Potentialeingänge ZK2 und ZK3 dienen zur Steuerung der Stromstoß-Erzeugung der einzelnen zugeordneten Kondensatoren C2, C5, C9. Der allen Stromzweigen gemeinsame Schalter/Transistor Q16 weist seinerseits die in Figur 6 gezeigten Ansteuereingänge ZKA112 und ZKCom und dient zur zusätzlichen gemeinsamen Steuerung der Stromstoß-Erzeugung der einzelnen Kondensatoren der Stromzweige, wie anhand der Figur 4 erläutert wurde.

Den Potentialeingangspaaren ZKA111/ZK1, ZKA111/ZK2, ZKA111/ZK3, ZKA112/ZKCom werden gleichzeitig komplementäre Signale zugeleitet, wenn die betreffenden Schalter Q6, Q9, Q13, Q16 zur genannten Stromstoß-Erzeugung gesteuert werden wie die Figuren 5 und 6 zeigen. Durch diese Verwendung von jeweils zwei komplementären Signalen wird vermieden, daß ein solcher Defekt des Mikroprozessors $\mu$P, bei dem alle seine Ein-/Ausgänge high oder low geschaltet werden, zu einer Fehlauslösung führt. Außerdem umgeht man mit dieser Verwendung komplementärer Signale Schwierigkeiten während der Reset-Phase des Mikroprozessors $\mu$P, in welcher der Mikroprozessor $\mu$P seine Ausgabeleitungen über einen internen pull-up-Widerstand auf high legt.

Zur Möglichkeit,

- mittels der gezeigten Schaltungsanordnung die Stromstöße zu messen, sowie
- evtl. diese Stromstöße jeweils nach ausreichender Sicherheit, daß der/die jeweils betroffene Auslöser/Zündpille auslöste, jeweils wieder - z.B. durch Sperren der Schalter Q6, Q9 bzw. Q13 - zu unterbrechen,
- sowie evtl. auch diese Stromstöße - z.B. in einem Speicher des Mikroprozessors $\mu$P - zu protokollieren,

sei noch auf Folgendes hingewiesen, darunter vor allem nämlich auch auf unterschiedliche Dimensionierungsmöglichkeiten und unterschiedliche Möglichkeiten für die Definition von Schwellwerten des Stromstoßes :

Wenn ein Stromstoß auch nur durch einen einzigen der Auslöser/Zündpillen fließt, erzeugt dieser Stromstoß gemäß den Figuren 1, 2 und 4 an den drei parallelgeschalteten Stromstoß-Erkennungswiderständen R41/R42/R56 einen Spannungsabfall mit einem Maximalwert von ca. 7 V. Dieser Spannungsabfall wird im gezeigten Beispiel über R70 und D17 auf ca. 3,5 V begrenzt und über den in Figur 2 gezeigten Meßpunkt MP10 auf einen Mikroprozessor-Interrupteingang geführt. Dieser Interrupt kann z.B. dazu dienen, um mittels der Schalter Q6, Q9, Q13 den Stromstoß abzubrechen. Diesen Interrupt-Eingang des Mikroprozessors $\mu$P kann man nun aber, besonders mittels der im Mikroprozessor $\mu$P gespeicherten Software, unterschiedlich definieren :

Ist dieser Interrupt-Eingang als TTL-Eingang definiert, so wird ein Interrupt beim Anliegen einer Spannung > 2 V sicher ausgelöst. Dies entspricht also einem Stromstoß von > 2 A. Die gezeigte Schaltungsanordnung läßt also erkennen, ob der Stromstoß mindestens ca. 2 A erreichte.

Wird jener Interrupteingang aber als CMOS-Eingang programmiert, so wird ein high-Pegel bei > 0,7. VCC, also bei > 3,5 V erkannt. In diesem Falle also wird ein Interrupt erst bei einem Zündstrom > 3,5 A generiert.

Beim in den Figuren gezeigten Beispiel enthalten die Stromzweige die Zündpillen und die Kondensatoren jeweils als Serienschaltung. Dann sind die Kondensatoren C2, C5, C9 nicht nur leicht aufladbar und beim Unfall leicht und schnell entladbar. Außerdem sind die wichtigsten Bauteile der Schaltungsanordnung sehr gut testbar, sogar während des Betriebs des Fahrzeuges. Die Erfindung kommt also ohne den zentralen Zündkondensator aus und braucht daher auch nicht zusätzliche spezielle Entkopplungsmaßnahmen zwischen den verschiedenen Stromzweigen, um trotz Kurzschluß in einem ausgelösten Auslöser eine sichere Auslösung der übrigen Auslöser zu erreichen.

Eine weitere Verbesserung der erfindungsgemäßen Schaltungsanordnung ist auch dadurch möglich, daß nicht nur ein einziger Safing-Sensor / Crash-Sensor das Entladen der Kondensatoren C2, C5, C9 auslöst. Um die Sicherheit gegen Fehlzündungen, z.B. auch beim Durchfahren von Schlaglöchern, zu erhöhen, können zusätzlich weitere Safing-Sensoren / Crash-Sensoren angebracht werden, wobei die Schaltungsanordnung bevorzugt nur dann die Kondensatoren C2, C5, C9 entlädt, wenn mindestens zwei der Safing-Sensoren den Unfall anzeigen. Eine weitere Verbesserung ist dadurch möglich, daß nicht alle diese Sensoren einen identischen Aufbau aufweisen, sondern einen unterschiedlichen Aufbau. So kann z.B. der in Figur 1 gezeigte elektronische Sensor ES zusätzlich angebracht sein, wobei dann der in dieser Figur gezeigte Schalter SS z.B. Bestandteil eines mechanischen Safing-Sensors ist. Wenn man den zeitlichen Verlauf des Ausgangssignals des elektronischen Sensors ES, wie in Figur 1 gezeigt, vom Mikroprozessor $\mu$P daraufhin auswerten läßt, ob der zeitliche Verlauf wirklich typisch für einen Unfall ist (also z.B. nicht typisch für ein Schlagloch in der Straße), ist die Sicherheit gegen Fehlauslösungen des Schutzsystems weiter erhöht.

Die Erfindung bzw. deren Weiterbildungen gestatten also eine lange Reihe von Vorteilen zu erreichen :

1. Die Schaltungsanordnung eignet sich zum Auslösen eines Insassen-Schutzsystems, bei dem ein oder mehrere Stromzweige parallelgeschaltet sind, wobei jeder dieser Stromzweige seinen eigenen Energiespeicher hat.

2. Die Entkoppelung erfolgt jeweils u.a. über einen in Serie geschalteten hochohmigen Widerstand.

3. Die Auslösung erfolgt mit Hilfe von Schaltern/Transisotren Q6/Q9/Q13 einerseits und Q16 andererseits, sowie einem zusätzlichen, z.B. mechanischen, Sensor-gesteuerten Schalter SS.

4. Schließt nur ein von den Ansteuerschaltungen ANST gesteuerter, an sich normalerweise den Zündstrom eines Stromzweiges auslösender Schalter - z.B. nur Q6 in Figur 2 und 4 - , aber nicht gleichzeitig der gemeinsame Schalter Q16, dann fließt nur ein Meßstrom über den in Figur 2 gezeigten Widerstand R49/R43, meßbar am Meßpunkt MP8, sowie ein zum Auslösen des/der Auslösers/Zündpille zu schwacher Strom durch die betreffende Zündpille des betreffenden Stromzweiges, meßbar an den in Figur 2 gezeigten Meßpunkten MP1/MP2 als Differenzspannung über der betreffenden Zündpille, diese Differenzspannung ist dann ein Maß für den (momentanen) Zündpillenwiderstand. - Der zeitliche Verlauf der dann am Widerstand R49/R43 bzw. am Meßpunkt MP8 gemessenen Spannung ist überdies ein Maß für die Kapazität des betreffenden Kondensators - C2, C5, C9 - des betreffenden Stromzweiges.

5. An den Stromstoß-Erkennungswiderstand R41/R56/R42 kann bei einem Unfall mittels des Meßpunktes MP10 die Höhe bzw. der zeitliche Verlauf des jeweiligen Stromstoßes gemessen werden.

6. Durch die Reihenschaltung Q6/Q16 bzw. Q9/Q16 bzw. Q13/Q16 und durch das Durchschalten von jeweils nur einem einzigen dieser vier Schalter Q6, Q9, Q12, Q16 kann jeder Stromzweig getestet werden, ohne daß die Gefahr einer Fehlauslösung besteht. - Der vom Safing-Sensor gesteuerte Schalter SS gewährleistet, daß bei einem Fehler in der Schaltungsanordnung keine ungewollte Auslösung erfolgt.

**Patentansprüche**

1. Schaltungsanordnung zum Auslösen eines Insassen-Schutzsystems eines Fahrzeuges - z.B. eines Airbag- und / oder Gurtstrammersystems - bei einem Unfall genügender Schwere,
    - mit einer Spannungsquelle (VCC30, GND), welche vor dem Unfall eine Parallelschaltung von mindestens zwei Stromzweigen (ZP1/C2, ZP2/C5, ZP3/C9) speist,
    - mit jeweils einem eigenen Auslöser - z.B. eine Zündpille (ZP1, ZP2, ZP3) - in jedem Stromzweig, wobei durch diesen Auslöser bei dem Unfall ein Stromstoß geleitet wird, der seinerseits den Schutz - also z.B. das Aufblasen eines Airbag - auslösen soll,
    - mit jeweils einem eigenen, vor dem Unfall durch die Spannungsquelle aufgeladenen Kondensator (C2, C5, C9) in jedem Stromzweig, wobei dieser Kondensator eine so hohe Eigenkapazität (z.B.

270 µF) als auch vor dem Unfall eine so hohe Zündspannung (z.B. 30 V) aufweist, daß er bei dem Unfall, trotz eventueller zusätzlicher Energieverluste (in D2, D8, D11, Q6, Q9, Q13, Q16, R41, R42, R56), dem zugeordneten Auslöser einen Stromstoß mit für die Schutzauslösung ausreichender Energie liefert,
    - mit in die Stromzweige eingefügten Entkopplungselementen - z.B. Widerständen (R7, R32, R33) - , welche bei dem Unfall die innerhalb dieser Stromzweige durch den betreffenden Kondensator und den betreffenden Auslöser fließenden Stromstöße gegenseitig entkoppeln,
    - mit einzeln jedem Stromzweig zugeordneten individuellen Auslöseschaltern (Q6, Q9, Q13), welche in diesen Stromzweigen jeweils zwischen den Entkopplungselementen einerseits und den Kondensatoren und Auslösern andererseits angeschlossen sind, wobei die vor dem Unfall nichtleitende Schaltstrecke dieser individuellen Auslöseschaltern bei dem Unfall in ihren leitenden Zustand übergeht und dadurch jeweils den Stromstoß durch den Auslöser des betreffenden Stromzweiges ermöglicht, und
    - mit mindestens einem, in Reihe zu den Auslösern bzw. individuellen Auslöseschaltern eingefügten gemeinsamen Auslöseschalter (SS, Q16), dessen vor dem Unfall nichtleitende Schaltstrecke bei dem Unfall in ihren leitenden Zustand übergeht und dadurch die Stromstöße durch die Auslöser ermöglicht,

**dadurch gekennzeichnet,**
    - daß jeder der Stromzweige eine Serienschaltung des Kondensators und des Auslösers sowie mindestens einen einzigen Meßpunkt enthält, wobei der Kondensator und / oder der Auslöser jeder Serienschaltung vor dem Unfall durch die Spannungsquelle auf Dauerbetriebsspannungen gelegt sind, welche über solche Meßpunkte prüfbar sind, und
    - daß die Schaltstrecken der individuellen Auslöseschalter jeweils die Reihenschaltungen, welche aus dem betreffenden Stromzweig und dem / die gemeinsamen Auslöseschalter gebildet sind, überbrükken, wobei der gemeinsame / die gemeinsamen Auslöseschalter in Reihe zur Parallelschaltung bzw. zu den individuellen Auslöseschaltern (Q6, Q9, Q13) so eingefügt ist, daß die individuellen Auslöseschalter bei dem Unfall jeweils niederohmig den Stromstoß des betreffenden Kondensators durch den ihnen individuell zugeordneten Auslöser ermöglichen.

2. Schaltungsanordnung nach Patentanspruch 1, **dadurch gekennzeichnet,**
   - daß während der Überprüfung eines Stromzweiges und während über einen Meßpunkt ein Meßstrom über zuverlässigkeitsrelevante Bestandteile dieses Stromzweiges fließt, die Schaltstrecke entweder des betreffenden individuellen Auslöse schalters oder des gemeinsamen Schalters nichtleitend ist.

3. Schaltungsanordnung nach Patentanspruch 1 oder 2,
   - daß sie eine Vielzahl von Meßpunkten (MP1 bis MP10) enthält, deren Potential vor dem Unfall während des Betriebes des Fahrzeuges zumindest einmal beim Anlassen des Motors kurzzeitig überprüft wird.

4. Schaltungsanordnung nach Patentanspruch 3, **dadurch gekennzeichnet,**
   - daß weitere Schalter (Q1, Q2, ferner in ANST) angebracht sind, welche während der Überprüfung ein oder mehrere Prüfpotentiale an definierte Schaltungspunkte (TEST, ANST1 bis ANST4, ZK1, ZKA111, ZKA112, ZKCom) der Schaltungsanordnung angelegen, um die dadurch bewirkten Potentiale der Meßpunkte (MP1 bis MP10) zu messen.

5. Schaltungsanordnung nach Patentanspruch 4, **dadurch gekennzeichnet,**
   - daß (über Q1/Q2/D18/R49/R43) über einen oder mehrere Meßpunkte an Bestandteile der Schaltungsanordnung angelegte Potentiale aussagekräftige, nämlich bei störungsfreiem Betrieb bei dem Unfall zumindest angenähert an diesen Bestandteilen auftretende (an MP8, MP10) Potentiale simulieren.

6. Schaltungsanordnung nach einem der vorhergehenden Patentansprüche, **dadurch gekennzeichnet,**
   - daß sie mindestens eine bei dem Unfall das Auslöseverhalten protokollierende Auswerteschaltung (R41/R56/R42, R70, C14, D17, MP10 in Verbindung mit $\mu$P) enthält.

7. Schaltungsanordnung nach einem der vorhergehenden Patentansprüche, **dadurch gekennzeichnet,**

   - daß sie einen speicherprogrammierten Mikroprozessor ($\mu$P) enthält, der zumindest einen Teil der Schalter (Q16, Q6, Q9, Q13) steuert.

8. Schaltungsanordnung nach Patentanspruch 7 und nach einem der Patentansprüche 3 bis 6, **dadurch gekennzeichnet,**
   - daß der Mikroprozessor ($\mu$P) auch die Potentiale der Meßpunkte (MP1 bis MP10) überprüft und
   - daß bei Entdecken eines Fehlers dem / den Insassen diese Entdeckung anzeigt.

9. Schaltungsanordnung nach einem der vorhergehenden Patentansprüche, **dadurch gekennzeichnet,** daß
   - daß die Kondensatoren (C2, C5, C9) mittels der von dem oder von den Crashsensoren gesteuerten individuellen Auslöseschalter beim Unfall zeitlich dicht hintereinander den Stromstoß über die zugeordneten Auslöser liefern.

## Claims

1. Circuit arrangement for triggering a vehicle passenger protection system - for example an air bag and/or belt lock system - in the event of a sufficiently serious accident,
   - having a voltage source (VCC30, GND) which before the accident feeds a parallel circuit of at least two current branches (ZP1/C2, ZP2/C5, ZP3/C9),
   - having in each case a dedicated trigger - for example a primer capsule (ZP1, ZP2, ZP3) - in each current branch, this trigger conducting, during the accident, a current impulse which for its part is to trigger the protection - that is to say the inflation of an air bag, for example,
   - having in each case a dedicated capacitor (C2, C5, C9) charged before the accident by the voltage source, in each current branch, this capacitor having both so high a self-capacitance (for example 270 $\mu$F) and, before the accident, so high an ignition voltage (for example 30 V) that during the accident it delivers to the assigned trigger a current impulse having sufficient energy to trigger the protection despite any additional energy losses (in D2, D8, D11, Q6, Q9, Q13, Q16, R41, R42, R56),
   - having decoupling elements - for example resistors (R7, R32, R33) - which are inserted into the current branches and during the accident mutually decouple the current impulses flowing inside these current branches through the relevant capacitor and the relevant trigger,

- having individual triggering switches (Q6, Q9, Q13), which are individually assigned to each current branch and in each case are connected in these current branches between the decoupling elements, on the one hand, and the capacitors and triggers, on the other hand, the switching path, non-conductive before the accident, of these individual triggering switches making the transition during the accident to its conductive state and thereby in each case permitting the current impulse through the trigger of the relevant current branch, and

- having at least one common triggering switch (SS, Q16), which is inserted in series with the triggers or individual triggering switches and whose switching path, which is non-conductive before the accident, makes the transition to its conductive state during the accident and thus permits the current impulses through the triggers,

characterised in that

- each of the current branches contains a series circuit of the capacitor and the trigger as well as at least a single measuring point, the capacitor and/or the trigger of each series circuit being connected before the accident by means of the voltage source to continuous-operation voltages which can be tested via such measuring points, and

- in that the switching paths of the individual triggering circuits in each case bridge the series circuits which are formed from the relevant current branch and the common triggering switch/triggering switches, the common triggering switch/triggering switches being inserted in series with respect to the parallel circuit or to the individual triggering switches (Q6, Q9, Q13) in such a way that during the accident the individual triggering switches permit in a low-resistance fashion in each case the current impulse of the relevant capacitor through the triggers individually assigned to them.

2. Circuit arrangement according to Claim 1, characterised in that

- during the checking of a current branch and while a measuring current flows via a measuring point through components of this current branch that are relevant to safety, the switching path either of the relevant individual triggering switch or of the common switch is non-conductive.

3. Circuit arrangement according to Claim 1 or 2, characterised in that

- it contains a plurality of measuring points (MP1 to MP10), whose potential is briefly checked before the accident during the operation of the vehicle, at least once upon starting the engine.

4. Circuit arrangement according to Claim 3, characterised in that

- further switches (Q1, Q2, further in ANST) are provided which during checking apply one or more test potentials to defined switching points (TEST, ANST1 to ANST4, ZK1, ZKA111, ZKA112, ZKCom) of the circuit arrangement in order to measure the potentials of the measuring points (MP1 to MP10) thereby produced.

5. Circuit arrangement according to Claim 4, characterised in that

- potentials applied (via Q1/Q2/D18/R49/R43) to components of the circuit arrangement via one or more measuring points simulate informative potentials, to be precise potentials occurring (at MP8, MP10) at least approximately at these components during fault-free operation in the event of an accident.

6. Circuit arrangement according to one of the preceding claims, characterised in that

- it contains at least one evaluation circuit (R41/R56/R42, R70, C14, D17, MP10 connected to $\mu$P) which logs the triggering behaviour in the event of an accident.

7. Circuit arrangement according to one of the preceding claims, characterised in that

- it contains a programmable microprocessor ($\mu$P) which controls at least a portion of the switches (Q16, Q6, Q9, Q13).

8. Circuit arrangement according to Claim 7 and according to one of claims 3 to 6, characterised in that

- the microprocessor ($\mu$P) also checks the potentials of the measuring points (MP1 to MP10), and

- upon discovering a defect displays this discovery to the passenger/passengers.

9. Circuit arrangement according to one of the preceding claims, characterised in that
- during the accident the capacitors (C2, C5, C9) deliver the current impulse consecutively in time one immediately after the other via the assigned triggers by means of the individual triggering switches controlled by the crash sensor or sensors.

**Revendications**

1. Circuit destiné à déclencher un système de protection des occupants d'un véhicule - par exemple un air-bag et/ou un système de tension de ceinture - dans le cas d'un accident d'une gravité suffisante,
- comportant une source de tension électrique (VCC30, 6ND) qui alimente, avant l'accident un circuit en parallèle comportant au moins deux branches de courant (ZP1/C2, ZP2/C5, ZP3/C9),
- comportant dans chaque branche de courant, un déclencheur propre respectif - par exemple un détonateur (ZP1, ZP2, ZP3), un choc de courant étant conduit en cas d'accident dans ce déclencheur qui doit en ce qui le concerne déclencher la protection - c'est-à-dire, par exemple le gonflage d'un air-bag,
- comportant dans chaque branche de courant, un condensateur (C2, C5, C9) propre respect if, chargé avant l'accident par la source de courant, ce condensateur ayant une capacité propre si élevée (par exemple 270 µF) que même avant l'accident il présente une tension d'allumage si élevée (par exemple 30V) que, lors de l'accident, en dépit de pertes d'énergie supplémentaires éventuelles (en D2, D8, D11, Q6, Q9, Q13, Q16, R41, R42, R56) il envoie au déclencheur qui lui est affecté un choc de courant d'une énergie suffisante pour le déclenchement de la protection,
- comportant des éléments de désaccouplement insérés dans les branches de courant - par exemple des résistances (R7, R32, R33), qui, lors de l'accident désaccouplent réciproquement les chocs de courant traversant, à l'intérieur de ces branches de courant, le condensateur concerné et le déclencheur concerné,
- comportant des commutateurs de déclenchement (Q6, Q9, Q13) individuels affectés individuellement à chaque branche de courant qui sont connectés dans ces branches de courant respectives entre d'une part les éléments de désaccouplement et d'autre part les condensateurs et les déclencheurs, la partie de commutation non conductrice de ces commutateurs de déclenchement passant à son état conducteur lors de l'accident et rendant ainsi possible un choc de courant respectif dans le déclencheur de la branche de courant concernée, et
- comportant au moins un commutateur de déclenchement (SS, Q16) commun inséré en série par rapport aux déclencheurs ou aux commutateurs de déclenchement individuels, dont la partie de commutation non conductrice avant l'accident passe à son état conducteur lors de l'accident et rend ainsi possibles les chocs de courant dans les déclencheurs,
caractérisé en ce que
- chacune des branches de courant comporte un montage en série du condensateur et du déclencheur, ainsi qu'au moins un point de mesure unique, le condensateur et/ou le déclencheur de chaque circuit en série étant soumis avant l'accident de la part de la source de courant à des tensions de fonctionnement permanent qui sont susceptibles d'être vérifiées par l'intermédiaire de tels points de mesure,
- et que les parties de commutation des commutateurs de déclenchement individuels shuntent respectivement les circuits en série qui sont formés par la branche de courant considérée et par le-(les) commutateur(s) de déclenchement commun(s), le commutateur commun (les commutateurs communs) étant insérés en série par rapport au circuit en parallèle ou par rapport aux commutateurs de déclenchement (Q6, Q9, Q13) individuels, de manière telle que lors de l'accident les commutateurs de déclenchement individuels rendent possible, avec une faible résistance, le choc de courant respectif, du condensateur concerné, dans le déclencheur qui leur est individuellement affecté.

2. Circuit selon la revendication 1,
caractérisé en ce que
pendant la vérification d'une branche de courant et pendant le passage d'un courant de mesure dans un point de mesure, par l'intermédiaire de pièces constitutives de sécurité de cette branche de courant, soit la partie de commutation du déclencheur individuel concerné, soit la partie de commutation du commutateur commun, est non conductrice.

3.  Circuit selon la revendication 1 ou 2,
    -   caractérisé en ce qu' il comporte une pluralité de points de mesure (MP1 à MP10) dont le potentiel est vérifié brièvement avant l'accident pendant le fonctionnement du véhicule au moins une fois lors du démarrage du moteur.

4.  Circuit selon la revendication 3,
    -   caractérisé en ce que
    -   d'autres commutateurs (Q1, Q2, en outre dans ANST) sont montés, lesquels appliquent pendant la vérification un ou plusieurs potentiels de mesure à des points définis (TEST, ANST 1 à ANST 4, ZK 1, ZKA 111, ZKA 112, ZK Com) du circuit, afin de mesurer des potentiels ainsi appliqués aux points de mesure (MP1 à MP10).

5.  Circuit selon la revendication 4,
    -   caractérisé en ce que
    -   des potentiels appliqués par l'intermédiaire de (Q1, Q2 / D18 / R49 / R43) sur un ou plusieurs points de mesure, a des pièces constitutives du circuit, simulent des potentiels prédictifs, à savoir des potentiels qui, s'il n'y a pas défaillance de fonctionnement, apparaissent lors de l'accident au moins de façon approchée sur ces pièces constitutives au cours du fonctionnement sans incident.

6.  Circuit selon l'une des revendications précédentes,
    -   caractérisé en ce qu'
    -   il comporte au moins un circuit d'exploitation (R41 / R56 / R42, R70, C14, D17, MP10 en liaison avec µP) qui gouverne le processus du comportement de déclenchement lors de l'accident.

7.  Circuit selon l'une des revendications précédentes,
    -   caractérisé en ce qu'
    -   il comporte un microprocesseur µP à mémoire programmée qui, commande au moins une partie des commutateurs (Q16, Q6, Q9, Q13).

8.  Circuit selon la revendication 7 et selon l'une des revendications 3 à 6,
    -   caractérisé en ce que
    -   le microprocesseur (µP) vérifie également les potentiels des points de mesure (MP1 à MP10),

    -   et que lors de la découverte d'une anomalie, il indique cette découverte à l'occupant/aux occupants.

9.  Circuit selon l'une des revendications précédentes,
    -   caractérisé en ce qu'
    -   en cas d'accident les condensateurs (C2, C5, C9) envoient le choc de courant au moyen des commutateurs de déclenchement individuels commandés par le, ou les, capteurs de choc, l'un après l'autre, de façon très rapprochée dans le temps par l'intermédiaire des déclencheurs qui leur sont affectés.

# FIG 1

# FIG 2

EP 0 494 859 B1

FIG 3

FIG 4

14

FIG 5

FIG 6